# EUROPEAN PATENT APPLICATION

(11) **EP 1 154 182 A2**
(43) Date of publication of application: **14.11.2001**
(21) Application number: 01303911.0
(22) Date of filing: 30.04.2001
(51) Int. Cl.: F16K 31/122

(54) **Valve**

(30) Priority: 08.05.2000 JP 2000134832
(71) Applicant: SMC CORPORATION, Minato-ku, Tokyo (JP)
(72) Inventor: Sakurai, Toyonobu, c/o SMC Corporation Tsukuba, Tsukuba-gun, Ibaraki (JP)
(74) Representative: Findlay, Alice Rosemary

(57) **Abstract**

An inside of a cylinder tube 18 is partitioned into a plurality of piston chambers 23 with a plurality of partitions 22, a piston 24 being slidable in each piston chamber 23. Each piston 24 is mounted to a valve rod 25 and a pressure chamber 33 is formed at a first pressure receiving face of each piston 24. When pressure fluid is not supplied from an operating port 37 to each pressure chamber 33, the valve rod 25 moves forward due to the force of a valve spring 27 to press a diaphragm valve 11 against a valve seat 10. When pressure fluid is supplied from the operating port 37 to each pressure chamber 33, the valve rod 25 moves rearward due to the sum of the forces acting on the plurality of pistons 24 and the diaphragm valve 11 separates from the valve seat 10 due to its own elasticity to thereby open the valve.

## Description

The present invention relates to a cylinder operated selector valve which is a selector valve opened and closed by a fluid pressure cylinder.

A known form of a selector valve for switching a flow path of fluid is a cylinder operated selector valve in which a valve mechanism member is opened and closed by a fluid pressure cylinder. This type of selector valve is used, for example, in manufacture of semiconductor wafers for controlling a flow of gas in a process gas line. Often a plurality of selector valves are disposed close to each other on a unit substrate and therefore it is desirable for the selector valve to be miniaturised to the utmost in view of the space each occupies.

If the selector valve is miniaturised, however, the cylinder integrally mounted to the selector valve is also necessarily miniaturised. As a result, the pressure receiving area of the piston is reduced and the necessary operating force may not always be obtained.

In order to obtain large operating force with a small-diameter piston, a plurality of cylinders may be used and connected in tandem. With this method of connecting the plurality of cylinders, however, the structure is complicated and the diameters of the cylinders may be increased due to provision of flanges for connecting the cylinders to each other. Moreover, if connecting accuracy is insufficient, sliding resistance increases, operation becomes unstable and dust is likely to be generated due to wear of the sliding portion.

It is an object of the present invention to provide a small cylinder operated selector valve in which large operating force can be obtained with small-diameter pistons without connecting a plurality of cylinders in tandem.

According to the present invention, there is provided a cylinder operated selector valve comprising a valve mechanism portion including in a valve casing a fluid flow path, a valve seat provided at a midpoint of the flow path, and a diaphragm valve for coming in contact with and separating from the valve seat to open and close the flow path and a cylinder operating portion for opening and closing the diaphragm valve.

The cylinder operating portion includes a cylinder tube connected to the valve casing to be coaxial with the valve seat and the diaphragm valve. An inside of the cylinder tube is partitioned with a plurality of partitions into a plurality of piston chambers and pistons are respectively disposed for sliding in the respective piston chambers and mounted to a valve rod which is slidable through central portions of the partitions. A tip end of the valve rod extends to a position close to the diaphragm valve and opens and closes the diaphragm valve by moving forward and rearward. An operating port is formed and the operating port and the respective pressure chambers are connected through a connecting hole. A valve spring for generating force for biasing the diaphragm valve in a valve closing direction when the diaphragm valve is seated on the valve seat is also provided to the cylinder operating portion.

With the selector valve having the above structure, if pressure fluid is supplied from the operating port to the pressure chambers, the pistons are driven by fluid pressure, the valve rod moves, and the diaphragm valve opens or closes the valve seat. The operating force of the valve rod at this time is the sum of operating forces generated in the plurality of pistons. Therefore, large operating forces can be obtained even if the selector valve is miniaturised and the diameters of the pistons are small. Because the plurality of pistons are housed in the one cylinder tube, the structure is simple, processing and assembly are easy, and accuracy can be easily obtained as compared with the case in which a plurality of cylinders are connected in tandem.

In one embodiment, the valve casing is substantially in a pillar shape and has a mounting face to be mounted to a unit substrate on an end face opposite to a side where the cylinder tube is connected, and a plurality of fluid ports are provided to the mounting face. The cylinder tube is in a pillar shape elongated in an axial direction, the plurality of partitions which are formed separately are airtightly mounted inside the cylinder tube, the operating port is provided to the partition at an end portion of the cylinder tube, and the connecting hole is provided in the valve rod.

It is preferable that the cylinder tube has an outside diameter close to that of the valve casing. It is preferable that the respective partitions excluding the partition provided with the operating port and the respective pistons are respectively formed of disc-shaped members and have substantially the same structures.

In one preferred embodiment, the valve spring is disposed between the valve casing and the valve rod so as to move the valve rod forward to seat the diaphragm valve on the valve seat and the respective pressure chambers are formed at first pressure receiving faces of the respective pistons such that fluid pressure acting on the respective pistons generates a rearward operating force in the valve rod to thereby form the selector valve as a normally closed type.

In another preferred embodiment, a movable member for pressing the diaphragm valve in a seating direction is provided to the tip end of the valve rod, the movable member is biased forwardly by the valve spring, and the respective pressure chambers are formed at second pressure receiving faces of the respective pistons such that fluid pressure acting on the respective pistons generates a forward operating force in the valve rod to thereby form the selector valve as a normally opened type.

A pressing member for transmitting the operating force of the valve rod to the diaphragm valve may be disposed between the tip end of the valve rod and the diaphragm valve.

The invention will now be further described by way of example only with reference to the accompanying drawings in which
FIG. 1 is a sectional view of a first embodiment of a cylinder operated selector valve according to the present invention.
FIG. 2 is a sectional view of a second embodiment of the cylinder operated selector valve according to the invention.

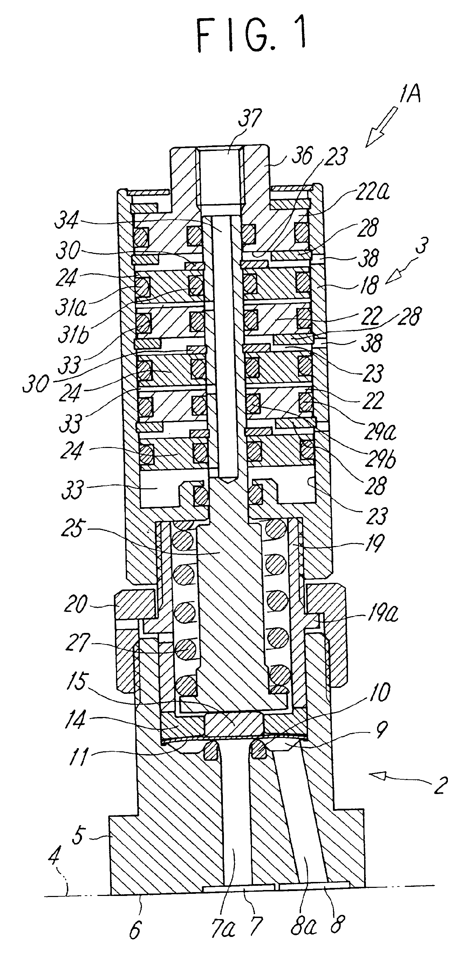

FIG. 1 shows a first embodiment of a cylinder operated selector valve. The selector valve 1A is a normally closed selector valve in which a closed state of a valve is maintained in non-operation and is formed by integrally connecting a valve mechanism portion 2 for controlling a flow of fluid such as gas and chemical solution and a cylinder operating portion 3 for operating the valve mechanism portion 2.

The valve mechanism portion 2 has a valve casing 5 substantially in a circular-cylindrical shape. An end face of axial one end of the valve casing 5 is formed with a mounting face 6 to be mounted to a unit substrate 4 of a gas control unit in a semiconductor wafer producing apparatus or the like and the mounting face 6 is formed with a plurality of fluid ports 7 and 8. In the valve caging 5, flow paths 7a and 8a for connecting the ports 7 and 8, a valve hole 9 into which the flow paths 7a and 8a open, and a valve seat 10 for surrounding an opening portion of the one flow path 7a in the valve hole 9 are formed. In the valve hole 9, a diaphragm valve 11 for coming in contact with and separating from the valve seat 10 to open and close the flow path 7a is provided. The diaphragm valve 11 is made of metal and is mounted by sandwiching an outer peripheral portion of the diaphragm valve 11 between an annular diaphragm valve retainer 14 and an inner bottom portion of the valve hole 9 and elastic force in such a direction that the diaphragm valve 11 separates from the valve seat 10 is applied to the diaphragm valve 11. A pressing member 15 for coming in contact with a back face of the diaphragm valve 11 is fitted for sliding in a central hole of the diaphragm valve retainer 14.

On the other hand, the cylinder operating portion 3 has one cylinder tube 18 in a circular-cylindrical shape and a cylindrical connecting member 19 screwed into an end of the cylinder tube 18. By screwing a nut member 20 engaged with a flange portion 19a of the connecting member 19 over the valve casing 5 with the connecting member 19 fitted in the valve hole 9 of the valve casing 5, the cylinder tube 18 is connected to the valve casing 5 to be coaxial with the valve seat 10 and the diaphragm valve 11. It is desirable that the cylinder tube 18 have an outside diameter close to that of the valve casing 5 and it is more desirable that the cylinder tube 18 have an outside diameter which is the same as or slightly smaller than that of the valve casing.

An inside of the cylinder tube 18 is partitioned into a plurality of piston chambers 23 with a plurality of partitions 22. A piston 24 is disposed for sliding in each the piston chamber 23 and the respective pistons 24 are mounted to a valve rod 25 which passes for sliding through central portions of the partitions 22. A tip end of the valve rod 25 extends from the cylinder tube 18 to a position close to the diaphragm valve 11 in the valve hole 9 and is in contact with the pressing member 15. A valve spring 27 is provided between the tip end of the valve rod 25 and the cylinder tube 18, the valve rod 25 is constantly pushed toward the diaphragm valve 11 by repulsing force of the valve spring 27, and the diaphragm valve 11 is pressed against the valve seat 10 through the pressing member 15 by the repulsing force of the valve spring 27 to close the flow path 7a. Therefore, the valve spring 27 generates force for seating the diaphragm valve 11 in valve closing when the diaphragm valve 11 is seated on the valve seat 10. The flow path 7a is opened by separating of the diaphragm valve 11 from the valve seat 10 by means of elastic force of the diaphragm valve 11 when the valve rod 25 moves rearward.

Each partition 22 is formed of a disc-shaped member formed separately from the cylinder tube 18. Each member is mounted inside the cylinder tube 18 by using a snap ring 28 provided to an inner peripheral face of the cylinder tube 18 and O-rings 29a and 29b for sealing an outer periphery of the member and the inner peripheral face of the cylinder tube 18 and for sealing an inner periphery of the member and an outer peripheral face of the valve rod 25 are respectively mounted to the outer and inner peripheries of the member.

On the other hand, the piston 24 is formed of a disc-shaped member having substantially the same structure as that of the partition 22 and mounted to the valve rod 25 by using a snap ring 30 provided to the outer peripheral face of the valve rod 25 and O-rings 31a and 31b for sealing an outer periphery of the piston 24 and the inner peripheral face of the cylinder tube 18 and for sealing an inner periphery of the piston 24 and the outer peripheral face of the valve rod 25 are respectively mounted to the outer and inner peripheries of the piston 24.

A pressure chamber 33 for applying fluid pressure to each piston 24 is formed on a side of a first pressure receiving face on a lower face of each the piston 24 and each pressure chamber 33 communicates with a connecting hole 34 provided in the valve rod 25. The partition 22 which is the closest to an outer end portion of the cylinder tube 18 is formed with a boss portion 36 extending outward in an axial direction of the cylinder tube 18. The boss portion 36 is formed with an operating port 37 and the operating port 37 and the connecting hole 34 in the valve rod 25 communicate with each other. By supplying pressure fluid such as compressed air from the operating port 37 to the respective pressure chambers 33, the valve rod 25 moves rearward and the diaphragm 11 separates from the valve seat 10.

A reference numeral 38 in the drawing designates a breathing chamber for allowing a breathing chamber formed on a side of a second pressure receiving face which is opposite to the first pressure receiving face of each piston 24 to open to an outside.

When pressure fluid is not supplied from the operating port 37 to each pressure chamber 33, the valve rod 25 is moved forward by the valve spring 27 to press the diaphragm valve 11 against the valve seat 10 through the pressing member 15. Therefore, the flow paths 7a and 8a are closed.

If pressure fluid is supplied from the operating port 37 to each pressure chamber 33, each piston 24 is driven by the fluid pressure and the valve rod 25 moves rearward. Therefore, the diaphragm valve 11 separates from the valve seat 10 due to its own elasticity and the valve is opened. The operating force of the valve rod 25 is the sum of operating forces generated in the plurality of pistons 24. With three pistons 24 as provided in the example shown in the drawing, the operating force is three times the force acting on any one piston 24. Therefore, it is possible to obtain a large operating force even if the selector valve is miniaturized and the piston 24 has a small diameter. Because the plurality of pistons 24 are housed in the one cylinder tube 18, there are advantages that the structure is simple, processing and assembly are easy, and accuracy can be easily obtained as compared with a case in which a plurality of cylinders are used by connecting the cylinders in tandem connection.

If the pressure fluid in each pressure chamber 33 is discharged, the valve rod 25 is moved forward by the valve spring 27 to press the diaphragm valve 11 against the valve seat 10 through the pressing member 15. Therefore, the flow paths 7a and 8a are closed.

The valve casing 5 and the cylinder tube 18 need not be circular cylinders and may be, for example, prisms.

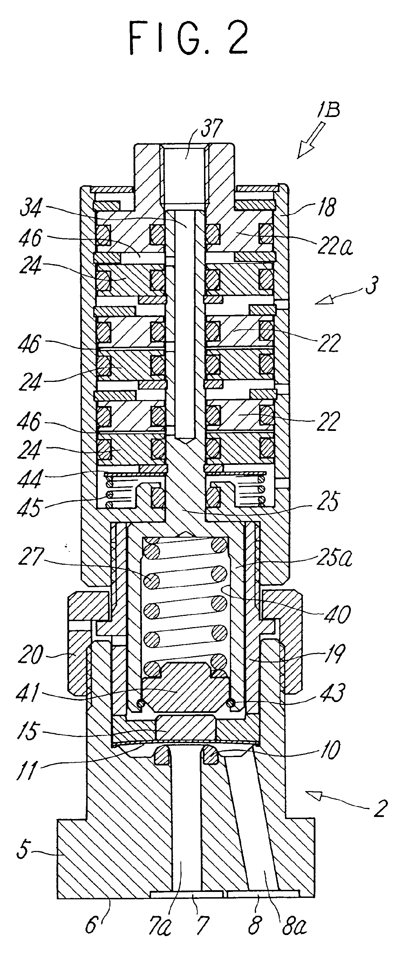

FIG. 2 shows a second embodiment of a selector valve This selector valve 1B is different from the selector valve 1A in the first embodiment in that the selector valve 1B is formed as a normally opened type in which an open state of the valve is maintained in non-operation while the selector valve 1A in the first embodiment is formed as the normally closed type.

In this selector valve 1B, in a portion 25a at a tip end of the valve rod 25 extending from the cylinder tube 18, a hole 40 is formed from a tip end face of the portion in an axial direction. A movable member 41 for coming in contact with the pressing member 15 is disposed for moving forward and rearward at a tip end portion of the hole 40 and the valve spring 27 is disposed between the movable member 41 and a hole bottom portion. A reference numeral 43 designates a stopper for locking the movable member 41 such that the movable member 41 does not come out of the hole 40.

In the cylinder tube 18, a return spring 45 is provided between a plate 44 mounted to the valve rod 25 and the cylinder tube 18 and the valve rod 25 is constantly biased rearward, i.e., in a valve opening direction by the return spring 45. A pressure chamber 46 is provided on a side of the second pressure receiving face of each the piston 24 and fluid pressure acting on each the piston 24 generates forward operating force in the valve rod 25.

Therefore, in a non-operation state in which the pressure fluid is not supplied from the operating port 37 to each pressure chamber 46, the valve rod 25 is moved rearward by the repulsing force of the return spring 45 as shown in FIG. 2 and the diaphragm valve 11 separates from the valve seat 10 due to its own elasticity to thereby maintain the open state of the valve.

If the pressure fluid is supplied from the operating port 37 to each the pressure chamber 46, because the valve rod 25 is moved forward by the fluid pressure operating force acting on each piston 24 and the movable member 41 pushes the pressing member 15 to press the diaphragm valve 11 against the valve seat 10, the valve is opened. At this time, the valve spring 27 is in a compressed state and the valve spring 27 generates force for seating the diaphragm valve 11.

Because other structures of the second embodiment are substantially similar to those of the first embodiment, like parts are provided with like reference numerals and will not be described again.

With the cylinder operated selector structure valve described above, it is possible to provide a small cylinder operated selector valve in which large operating force can be obtained with the small-diameter pistons without connecting a plurality of cylinders in tandem.

## Claims

1. A cylinder operated selector valve comprising a valve mechanism portion for opening and closing a fluid flow path and a cylinder operating portion, wherein the valve mechanism portion includes in a valve casing the fluid flow paw path, a valve seat provided in the said fluid flow path, and a diaphragm valve for coming in contact with and separating from the valve seat to open and close the fluid flow path and elastically biased in a direction away from the valve seat, wherein the cylinder operating portion includes a cylindrical tube connected to the valve casing coaxially with the diaphragm valve, a plurality of partitions for partitioning an interior region of the tube into a plurality of piston chambers, a valve rod slidable through central portions of the partitions and having a tip end extending to a position close to the diaphragm valve to open and close the diaphragm valve by forward and rearward movement, a plurality of pistons disposed for sliding in the piston chambers and mounted to the valve rod, a plurality of pressure chambers respectively formed at one pressure receiving face of the pistons, an operating port for supplying pressure fluid to the pressure chambers, a connecting hole for connecting the operating port and the pressure chambers, and a valve spring for generating force on the diaphragm valve in a valve closing direction when the diaphragm valve is seated on the valve seat.

2. A selector valve as claimed in claim 1, wherein the valve casing is substantially in a pillar shape and has a mounting face mountable to a unit substrate on an end face opposite to where the cylinder tube is connected, a plurality of fluid ports communicating with the fluid flow path are provided to the mounting face, the tube is in a pillar shape, the plurality of partitions are separately formed and are mounted in the tube, the operating port is provided to the partition in which a base end portion of the valve rod moves, and the connecting hole is provided in the valve rod.

3. A selector valve as claimed in claim 2, wherein the cylinder tube has an outside diameter close to that of the valve casing.

4. A selector valve as claimed in either claim 2 or claim 3, wherein the partitions except that provided with the operating port and the pistons are formed of disc-shaped members and have substantially the same structure.

5. A selector valve as claimed in any preceding claim, wherein the valve spring is disposed between the valve casing and the valve rod so as to move the valve rod forward to seat the diaphragm valve on the valve seat and the pressure chambers are formed at first pressure receiving faces of the pistons such that fluid pressure acting on the pistons generates a rearward operating force in the valve rod to thereby make the selector valve normally closed.

6. A selector valve as claimed in any one of claims 1 to 4, wherein the tip end of the valve rod is provided with a movable member for pressing the diaphragm valve in a closing direction, the movable member is biased forwardly by the valve spring, and the pressure chambers are at second pressure receiving faces of the pistons such that fluid pressure acting on the pistons generates a forward operating force in the valve rod to thereby make the selector valve normally opened.

7. A selector valve as claimed in any preceding claim, wherein a pressing member for transmitting operating force from the valve rod to the diaphragm valve is disposed between the tip end of the valve rod and the diaphragm valve.
